# EUROPEAN PATENT APPLICATION

(11) **EP 3 557 053 A1**
(43) Date of publication of application: **23.10.2019**
(21) Application number: 19159409.2
(22) Date of filing: 26.02.2019
(51) Int. Cl.: F03D 80/80

(54) **FIRE PROOF PANEL FOR WIND TURBINES**

(30) Priority: 17.04.2018 GB 201806244
(71) Applicant: Intumescent Systems Ltd, Dover, Kent CT15 7JG (GB)
(72) Inventor: Ward, Derek, Dover, Kent CT15 7JG (GB)
(74) Representative: Fry, David John

(57) **Abstract**

A fire proof barrier for protecting a housing of a wind turbine. The barrier comprising at least one panel-like structure comprising a layer of sponge material impregnated with water based intumescent material. One side of the sponge has a graphite cloth adhered to it. The outer surface of the cloth has a fibrous intumescent sheet adhered to it.

## Description

### Field of invention

The present invention relates to fire proof panel assembly design specifically for wind turbines.

### Background to the invention

Fires are a major risk to wind turbines. The nacelle of wind turbines (the main housing that houses all the power generating components, including the generator, gearbox, drive train and brake assembly), is conventionally made from glass fibre which is a combustible material with a low ignition point.

There have been many incidents of nacelles catching fire, not only resulting in devastating damage to entire assembly, causing massive financial loss, but also polluting the surrounding environment and risking human life. On some occasions, engineers have been trapped on the nacelle unable to climb down to the ground due to the fire rapidly spreading to the internal structure of the turbine which not only provides the conduit for the cables of the unit, but also provides the only route down to the ground.

Wind turbine manufacturers have invested heavily in researching fire barriers suitable for wind turbines but have struggled to find a solution to the problem as existing materials have been unable to prevent the heat reaching sufficient levels to ignite the fibre glass body when electrical components have caught fire.

The Applicant has worked with wind turbine companies to develop a fire proof barrier solution specifically for the problems faced by wind turbines.

The present invention though has application with any structures made from fibre glass, for example, without limitation, vehicle panels and boats, as well as building materials such as wall cladding.

The barrier may be retrofitted to existing fibreglass structures or may be built into the structure at the point of its manufacture or construction.

The barrier is formed from sheet panels to allow it to be adhered to the walls and ceilings of the structure, the structure being, for the purposes of this description, a wind turbine nacelle.

### Statement of invention

A fire proof panel for *inter alia* a housing of a wind turbine, the panel comprising a layer of sponge material impregnated with water based intumescent material, one side of the sponge having adhered thereto a cloth material impregnated with graphite, and the outer surface of the cloth having adhered thereto a fibrous intumescent sheet.

Preferably, the cloth is adhered to the sponge layer using an intumescent acrylic adhesive.

Preferably, the cloth is coated with an aqueous intumescent coating.

Preferably, the sheet it adhered to the cloth with an intumescent acrylic adhesive.

Preferably, the sheet is coated with an aqueous intumescent dispersion coating.

### Brief description of the drawings

One embodiment of the invention will now be described by way of example only, with reference to the accompanying figures in which
Figure 1 illustrates a fire proof panel constructed in accordance with the invention; and
Figure 2 illustrates, in cross section, part of a fibre glass housing having the fire proof barrier of figure 1 secured thereto.

### Detailed description of preferred embodiments

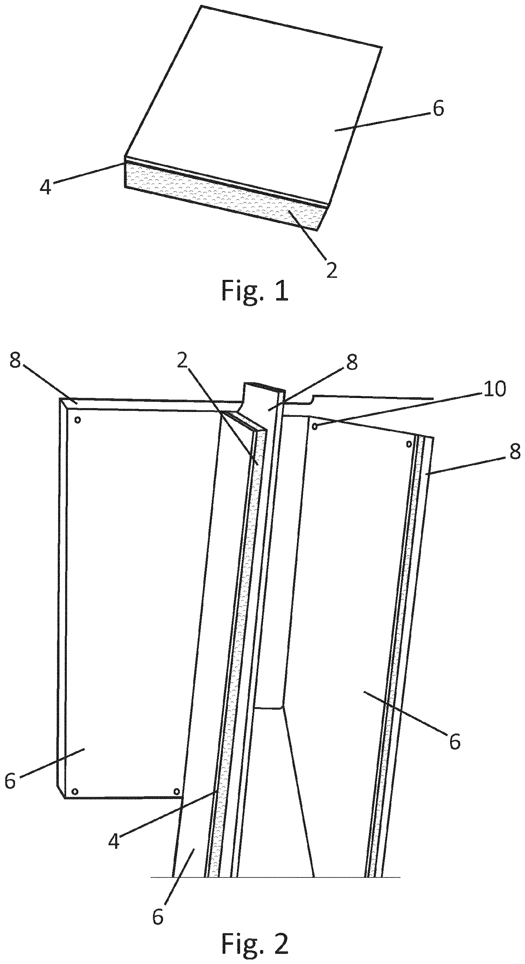

Referring to figure 1, a fire proof barrier according to the invention comprises a panel structure primarily consisting of a sponge layer 2 at least one side of which has layer of graphite cloth 4 adhered to the sponge 2. An intumescent sheet 6 is then adhered to the cloth 4. The sheet 8 is coated with a fire-proof coating. Finally the entire structure is coated with an aqueous dispersion coating.

Figure 1 shows a square panel. The panelling could be formed in any shape or size, and can be cut to size to cover all surfaces requiring protection.

The sponge layer 2 consists of a non-fibrous sponge made from flexible polyurethane treated with flame retardants, particulate filler and polymeric bonding agents. The sponge 2 only chars in the event of fire and does not burn. The sponge 2 is incombustible, emits no toxic fumes and slowly degrades in the fire. The sponge 2 is impregnated with water bound intumescent material.

The thickness of the sponger layer 2 will vary depending on the application but would be typically 15mm or more.

A single coated graphite cloth 4 is adhered to one side of the sponge 2.

The adhesive is an intumescent acrylic thixotropic adhesive. The adhesive is a water based polymer material with inert fillers.

The other side of the cloth 4 distal to the sponge 2 has adhered to it, an intumescent sheet material 6 having a thickness of typically 2mm. The sheet material is a fibrous material impregnated with graphite intumescent. The sheet material is coated with a water-based intumescent coating.

The sheet material 6 is adhered to the cloth 4 using the same or similar intumescent acrylic adhesive as previously described.

An aqueous dispersion coating with intumescent material is then applied to the structure in two or three coats. The flexible coating develops a micro-porous intumescent to insulate and further protect the outer sheet structure.

The fire proof barrier structure has been specifically developed to protect the structural integrity of fibre glass from around 4mm thick in the event of fire and has particular application with fibre glass structures of typically 6mm thick used for vehicle panels and walls for wind turbines. Should electrical components catch fire the fire proof panel is capable of withstanding up to 1000°C during which it provides continued insulation to the fibre glass body protecting its structural integrity.

The intumescent material within the barrier expands and eventually separates from the sponge 2 at which point it falls onto the components stifling the oxygen and extinguishing the flames in that vicinity.

Panel sections are adhered to the internal walls, ceiling and floor of the fibre glass housing 8 using an intumescent mastic and acrylic adhesive with the sponge 2 layer being placed against the outer surfaces of the fibreglass. The panels are mounted in such a way so that there are no gaps between each panel. The edges of neighbouring panels may overlap. If necessary, the panels may be further secured in place using mechanical fasteners such as screws 10.

A flexible intumescent filler and sealant is applied to all the joints and corner sections of the housing 8. The filler and sealant is also applied around any cables extending through the unit. The filler and sealant may consists of an acrylic mastic impregnated with graphite to provide a permanent flexible joint to protect against fire, smoke and toxic fumes. The mastic consists of an aqueous acrylic polymer emulsion with plasticisers, inorganic extenders, reinforcing fillers, surfactants and fungicide.

It will be understood, that the various embodiments described herein have been described by way of example only and that modifications may be made thereto without departing from the spirit and scope of the present invention as defined in the accompanying claims.

## Claims

1. A fire proof panel for *inter alia* a housing of a wind turbine, the panel comprising a layer of sponge material impregnated with water based intumescent material, one side of the sponge having adhered thereto a cloth material impregnated with graphite, and the outer surface of the cloth having adhered thereto a fibrous intumescent sheet.

2. A fire proof panel according to claim 1, wherein the cloth is adhered to the sponge layer using an intumescent acrylic adhesive.

3. A fire proof panel according to claim 1 or claim 2, wherein the cloth is coated with an aqueous intumescent coating.

4. A fire proof panel according to any one of claims 1 to 3, wherein the sheet it adhered to the cloth with an intumescent acrylic adhesive.

5. A fire proof panel according to any one of claims 1 to 4, wherein the sheet is coated with an aqueous intumescent dispersion coating.
